# FASCICULE DE BREVET EUROPEEN

(11) **EP 0 347 339 B1**
(45) Date de publication et mention de la délivrance du brevet: **27.01.1993**
(21) Numéro de dépôt: 89420198.7
(22) Date de dépôt: 08.06.1989
(51) Int. Cl.: C01B 15/037

(54) **Stabilisation du peroxyde d'hydrogène**
Stabilisierung von Wasserstoffperoxid
Stabilization of hydrogenperoxide

(30) Priorité: 13.06.1988 FR 8808198
(43) Date de publication de la demande: 20.12.1989
(73) Titulaire: ELF ATOCHEM S.A., 92800 Puteaux (FR)
(72) Inventeur: Lanniel, Geneviève, D-8000 München 83 (DE); Bouchenak, Jean-Claude, F-93470 Coubron (FR)

(56) Documents cités:
- EP-A- 0 009 839
- US-A- 4 239 643

## Description

La présente invention vise la stabilisation du peroxyde d'hydrogène en milieu aqueux alcalin. Elle concerne plus particulièrement une composition utile pour atteindre ce but dans un bain de blanchiment de matières à base de fibre cellulosique tel qu'un bain de blanchiment ou blanchiment-désencollage simultané de matières textiles ou tissus.

Par désencollage on entend ici le traitement de dégradation de l'amidon au moyen d'un enzyme de type amylase ou d'une préparation à base d'un tel enzyme.

Par blanchiment on entend ici le traitement au moyen de peroxyde d'hydrogène H₂O₂.

La stabilisation de H₂O₂ en relation avec le blanchiment ou le blanchiment-désencollage simultané en milieu aqueux alcalin a fait l'objet de nombreuses publications comme par exemple le brevet des Etats Unis d'Amérique US-4294575.

Le blanchiment au moyen de H₂O₂ en milieu alcalin, réalisé isolément ou simultanément au désencollage, est largement décrit par exemple dans les brevets français publiés sous les numéros 2497244, 2543181, 2545854, le brevet des Etats Unis d'Amérique déjà cité ou la demande de brevet japonais publiée sous le numéro 57-39280.

Le brevet des Etats Unis d'Amérique n°4239643 décrit de son côté une composition anhydre ou essentiellement anhydre pour accroître la stabilité de H₂O₂ dans un bain de blanchiment alcalin, constituée d'une combinaison de polyphosphate de métal alcalin et de sel alcalin de l'acide diéthylènetriaminepentaméthylènephosphonique de formule : 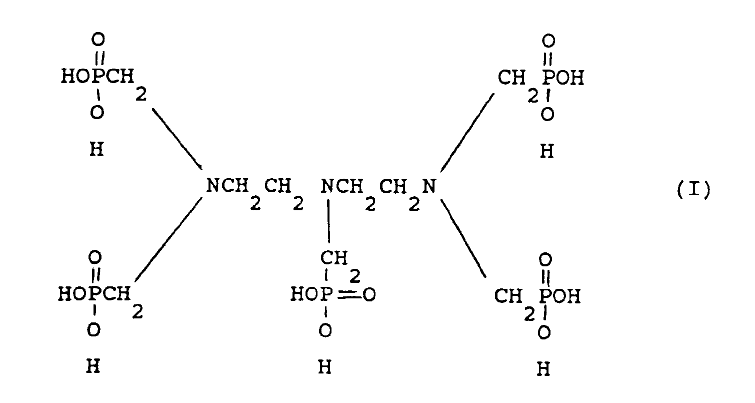
par exemple d'une combinaison d'hexamétaphosphate de sodium et d'un sel de sodium de l'acide (I). La composition décrite présente l'avantage d'être compatible avec les agents d'encollage non amylacés, à base par exemple d'alcool polyvinylique ou de carboxyméthylcellulose, qui peuvent accompagner ceux du type amylacé. Elle présente aussi l'avantage d'autoriser un blanchiment en l'absence de silicate de sodium.

Elle présente par contre les inconvénients liés à son caractère anhydride ou quasi anhydre qui, s'il fait défaut, la rend impropre à l'usage auquel elle est destinée : obligation d'être prémunis contre les risques de dilution par l'eau au stockage comme au transport, de se heurter aux difficultés inhérentes au stockage ou au transfert de matières solides comme par exemple le mottage, l'agrégation de ces matières.

La présente invention permet d'éviter les inconvénients de la composition décrite tout en gardant les avantages qu'elle procure.

Elle consiste en une composition utile pour stabiliser le peroxyde d'hydrogène H₂O₂ en milieu aqueux alcalin, qui contient un hexamétaphosphate d'un métal alcalin et un sel alcalin de l'acide diéthylénetriaminepentaméthylènephosphonique, caractérisée en ce qu'elle est un liquide aqueux contenant, par litre et en plus de l'eau, 100 g. à 300 g. de carbonate de potassium K₂CO₃ et 0 à 200 g. de carbonate de sodium Na₂CO₃ de façon à ce que la somme des quantités de K₂CO₃ et de Na₂CO₃ soit 280 g. à 300 g., 50 à 150 g. d'hexamétaphosphate de métal alcalin et une quantité d'un sel de métal alcalin de l'acide diéthylènetriaminepentaméthylènephosphonique correspondant à une quantité d'acide diéthylènetriaminepentaméthylènephosphonique actif comprise entre 15 g et 50 g.

Par quantité d'acide diéthylènetriaminepentaméthylènephosphonique actif on entend la quantité d'acide diéthylènetriaminepentaméthylènephosphonique qui correspond à la quantité d'hydroxyde de sodium nécessaire pour passer d'un point d'inflexion à l'autre de la courbe de pH obtenue par titrimétrie au moyen d'hydroxyde de sodium d'une solution aqueuse du sel de métal alcalin dudit acide, amenée avant titrage à un pH égal à environ 2 à l'aide d'acide chlorhydrique selon la procédure indiqué par la société MONSANTO pour les phosphonates DEQUEST® publiée dans ses notices commerciales.

L'hexamétaphosphate de métal alcalin le plus généralement employé est l'hexamétaphosphate de sodium.

Le sel de métal alcalin de l'acide diéthylènetriaminepentaméthylènephosphonique le plus souvent employé est un sel de sodium comme par exemple le sel heptasodique dudit acide. Ce dernier sel est par exemple commercialisé sous forme de solution aqueuse telle que le DEQUEST®, référence 2066, de la société MONSANTO à 25 % d'acide actif.

Une composition selon l'invention qui convient particulièrement bien est celle contenant, par litre, et en plus de l'eau, environ : 150 g. de Na₂CO₃, 150 g. de K₂CO₃, 100 g. d'hexamétaphosphate de sodium et une quantité de sel heptasodique de l'acide diéthylènetriaminepentaméthylènephosphonique telle que la quantité d'acide diéthylènetriaminepentaméthylènephosphonique actif soit égal à 25 g. Cette formulation particulière est désignée dans tout ce qui suit par (A).

Une composition selon l'invention ne présente pas, sur le plan de l'aspect comme sur celui de l'effet, d'évolution significative après un temps prolongé de stockage.

La température de cristallisation des compositions selon l'invention est suffisamment basse pour ne pas poser de problème de stockage.

Par exemple une composition selon l'invention ne différant de celle ci-dessus que par les quantités de Na₂CO₃ et K₂CO₃, toutes deux égales cette fois à 140 g., cristallise à une température encore inférieure à 0°C.

Le milieu aqueux dans lequel la composition de l'invention est utile pour stabiliser H₂O₂ est essentiellement, comme déjà signalé, un bain de blanchiment de matières à base de fibre cellulosique comme un bain de blanchiment ou de blanchiment-désencollage simultané de matières textiles ou tissus.

La quantité de composition de l'invention engagée dans un blanchiment ou un blanchiment-désencollage simultané connus est telle qu'elle procure aux bains un pH qui avantageusement n'excède pas 11 et est de préférence compris entre 9 et 11. Pour atteindre ce but on engage généralement par litre de bain un volume de décomposition compris entre 10 cm³ à 50 cm³ environ.

Par exemple, de 25 cm³ à 35 cm³ environ de (A) sont engagés par litre de bain.

Les exemples suivants permettent d'apprécier la constance de la qualité de la composition de l'invention dans le temps. Ils sont donnés à titre indicatif mais non limitatif. Les milieus aqueux alcalins dans lesquels est appréciée la composition de l'invention en présence de H₂O₂ simulent un bain de blanchiment ou de blanchiment-désencollage simultané de matières textiles à base de fibre cellulosique.

### Exemple 1 :

Une composition (A) selon l'invention contient, par litre, et en plus de l'eau: 150 g. de Na₂CO₃, 150 g. de K₂CO₃, 100 g. d'hexamétaphosphate d sodium et 25 g. d'acide diéthylènetriaminepentaméthylènephosphonique actif provenant de l'utilisation de 100 g. de DEQUEST 2066® pour former 1 l. de (A).

(A) est stockée à environ 20°C-25°C.

Au cours du stockage, le pouvoir stabilisant de A par rapport à H₂O₂ est évalué comme suit : une solution (L) est préparée qui contient dans l'eau et par litre, 30 cm³ de (A), 2 cm³ d'un agent tensioactif, SYNPERONIC 91-5® commercialisé par la Société ICI, 2 ppm d'ion ferrique Fe³⁺ (nitrate ferrique), 28,3 g. de H₂O₂ 100 % ; la vitesse de disparition de H₂O₂ dans (L) à 95°C est suivie en fonction du temps, durant 2 heures. Elle est la même que le suivi soit effectué le jour même où (A) est formée ou après que (A) ait été stockée pendant 6 mois. En l'occurence ladite vitesse est en moyenne de 6,2 g. de H₂O₂ par heure par litre de (L).

La présence, par litre de (L), de 5 g. de TERMAMIL L60^{R}, préparation d'amylase commercialisée par la Société NOVO ne change en rien cette constatation.

### Exemple 2 :

La variation de pH qu'entraîne l'addition de H₂SO₄ 4 N dans la solution (L) de l'exemple 1 qui contient 5 g. de TERMAMIL L60® par litre, est suivie pendant la durée de stockage de (A). Cette variation est la même qu'elle soit suivie le jour même de la formation de (A) ou après que (A) ait été stockée pendant 6 mois.

Elle est très faible et égale à environ 0,2 unité pH pour 5 cm³ de H₂SO₄ 4 N ajoutés, à environ 0,5 unité pH pour 8 cm³ de H₂SO₄ 4 N ajoutés.

La constatation ci-dessus vaut que (L) contienne, par litre, 8 g. de silicate de sodium exprimé en poids de solution 36°Bé (densité 1,33) ou ne contienne pas de silicate.

La composition de l'invention a donc sur le bain un effet tampon prononcé qui ne s'altère pas dans le temps.

## Revendications

1. Composition utile pour stabiliser le peroxyde d'hydrogéne en milieu aqueux alcalin, qui contient un hexamétaphosphate d'un métal alcalin et un sel alcalin de l'acide diéthylénetriaminepentaméthylénephosphonique, caractérisée en ce qu'elle est un liquide aqueux contenant, par litre et en plus de l'eau, 100 g. à 300 g. de carbonate de potassium K₂ CO₃ et 0 à 200 g. de carbonate de sodium Na₂CO₃ de façon à ce que la somme des quantités de K₂CO₃ et de Na₂CO₃ soit 280 g. à 300 g., 50 à 150 g. d'hexamétaphosphate de métal alcalin et une quantité d'un sel de métal alcalin de l'acide diéthylènetriaminepentaméthylènephosphonique correspondant à une quantité d'acide diéthylènetriaminepentaméthylènephosphonique actif comprise entre 15 g. et 50 g.

2. Composition selon la revendication 1, caractérisée en ce que l'hexamétaphosphate est l'hexamétaphosphate de sodium.

3. Composition selon l'une des revendications 1 et 2, caractérisée en ce que le phosphonate est un sel de sodium de l'acide diéthylènetriaminepentaméthylènephosphonique.

4. Composition selon la revendication 3, caractérisée en ce que le phosphonate est le sel heptasodique de l'acide diéthylènetriaminepentaméthylènediphosphonique.

5. Composition selon la revendication 4, caractérisée en ce qu'elle contient, par litre,et en plus de l'eau, 150 g. de Na₂CO₃, 150 g. de K₂CO₃, 100 g. d'hexamétaphosphate de sodium et une quantité de sel heptasodique de l'acide diéthylènetriaminepentaméthylènephosphonique telle que la quantité d'acide diéthylènetriaminepentaméthylènephosphonique actif soit égale à 25 g.

## Patentansprüche

1. Zusammensetzung geeignet zum Stabilisieren von Wasserstoffperoxid in wässrigem alkalischem Milieu, die ein Hexametaphosphat eines Alkalimetalls und ein Alkalisalz der Diethylentriaminpentamethylenphosphonsäure enthält, dadurch gekennzeichnet, daß diese eine wässrige Flüssigkeit ist, die pro Liter außer Wasser 100 bis 300 g Kaliumcarbonat K₂CO₃ und 0 bis 200 g Natriumcarbonat Na₂CO₃ enthält, so daß die Summe der Mengen an K₂CO₃ und Na₂CO₃ 280 g bis 300 g beträgt, ferner 50 bis 150 g Hexametaphosphat eines Alkalimetalls und eine 15 g bis 50 g aktiver Diethylentriaminpentamethylenphosphonsäure entsprechende Menge eines Alkalisalzes der Diethylentriaminpentamethylenphosphonsäure.

2. Zusammensetzung nach Anspruch 1, dadurch gekennzeichnet, daß das Hexametaphosphat Natriumhexametaphosphat ist.

3. Zusammensetzung gemäß einem der Ansprüche 1 und 2, dadurch gekennzeichnet, daß das Phosphonat ein Natriumsalz der Diethylentriaminpentamethylenphosphonsäure ist.

4. Zusammensetzung nach Anspruch 3, dadurch gekennzeichnet, daß das Phosphonat das Heptanatriumsalz der Diethylentriaminpentamethylendiphosphonsäure ist.

5. Zusammensetzung nach Anspruch 4, dadurch gekennzeichnet, daß diese pro Liter außer Wasser 150 g Na₂CO₃, 150 g K₂CO₃, 100 g Natriumhexametaphosphat und eine solche Menge des Heptanatriumsalzes der Diethylentriaminpentamethylenphosphonsäure enthält, daß die Menge an aktiver Diethylentriaminpentamethylenphosphonsäure 25 g beträgt.

## Claims

1. Composition, which is useful for stabilising hydrogen peroxide in alkaline aqueous medium, which contains an alkali metal hexametaphosphate and an alkali metal salt of diethylenetriaminepentamethylenephosphonic acid, characterised in that it is an aqueous liquid containing, per litre and in addition to water, 100 g to 300 g of potassium carbonate K₂CO₃ and 0 to 200 g of sodium carbonate Na₂CO₃ so that the sum of the quantities of K₂CO₃ and Na₂CO₃ is 280 g to 300 g, 50 to 150 g of alkali metal hexametaphosphate and a quantity of an alkali metal salt of diethylenetriaminepentamethylenephosphonic acid corresponding to a quantity of active diethylenetriaminepentamethylenephosphonic acid of between 15 g and 50 g.

2. Composition according to Claim 1, characterised in that the hexametaphosphate is sodium hexametaphosphate.

3. Composition according to one of Claims 1 and 2, characterised in that the phosphonate is a sodium salt of diethylenetriaminepentamethylenephosphonic acid.

4. Composition according to Claim 3, characterised in that the phosphonate is the heptasodium salt of diethylenetriaminepentamethylenephosphonic acid.

5. Composition according to Claim 4, characterised in that it contains, per litre, and in addition to water, 150 g of Na₂CO₃, 150 g of K₂CO₃, 100 g of sodium hexametaphosphate and a quantity of heptasodium salt of diethylenetriaminepentamethylenephosphonic acid such that the quantity of active diethylenetriaminepentamethylenephosphonic acid is equal to 25 g.
